# EUROPÄISCHE PATENTSCHRIFT

(11) **EP 2 175 206 B1**
(45) Veröffentlichungstag und Bekanntmachung des Hinweises auf die Patenterteilung: **14.01.2015**
(21) Anmeldenummer: 09171443.6
(22) Anmeldetag: 28.09.2009
(51) Int. Cl.: F24D 19/10, G05D 23/00

(54) **Verfahren zur Temperierung von Räumen eines Gebäudes**
Method for tempering rooms in a building
Procédé d'équilibrage des températures de pièces d'un bâtiment

(30) Priorität: 10.10.2008 DE 102008051275
(43) Veröffentlichungstag der Anmeldung: 14.04.2010
(73) Patentinhaber: Unovatis GmbH, 38229 Salzgitter (DE)
(72) Erfinder: Drescher, Rainer, 31188 Holle (DE); Stegmann, Jörg, 31604 Raddestorf (DE)
(74) Vertreter: Döring, Roger

(56) Entgegenhaltungen:
- WO-A1-94/19650
- WO-A1-2004/083733

## Beschreibung

Die Erfindung bezieht sich auf ein Verfahren zur Temperierung von Räumen eines Gebäudes unter Verwendung einer Anordnung mit einer Wärmepumpe, bei welchem in jedem Einzelraum des Gebäudes mindestens ein unter Zwischenschaltung eines Ventils mit der Wärmepumpe verbundener Heizkreis zur Durchleitung eines von der Wärmepumpe temperierten Mediums angeordnet wird, bei welchem in jedem Einzelraum ein den Istwert der in demselben herrschenden Temperatur erfassender Temperatursensor angebracht wird, an dem der Sollwert der für diesen Einzelraum gewünschten Temperatur eingestellt wird, und bei welchem in dem Gebäude eine zentrale Basis zur Verteilung des von der Wärmepumpe temperierten Mediums an die Heizkreise der Einzelräume installiert wird.

Die WO 2004 083 733 zeigt ein ähnliches Verfahren, bei dem anstelle der Wärmepumpe ein "Heizkessel oder eine andere Wärmequelle" offenbart ist.

Unter "Wärmepumpe" im Sinne der Erfindung ist allgemein eine mit einer vergleichsweise niedrigen Vorlauftemperatur, die im Bereich von 30 °C liegen kann, arbeitende Anlage zu verstehen, die unter Verwendung eines Wärmetauschers und einer Umwälzpumpe ein mehr oder weniger warmes Medium an ein angeschlossenes Rohrsystem zur Temperierung von Räumen in Gebäuden liefert. Das Wort "Wärmepumpe" soll dabei auch für andere Anlagen, insbesondere Heizungsanlagen, gelten, die mit vergleichsweise niedriger Vorlauftemperatur arbeiten. Das Wort "Temperierung" umfaßt sowohl eine Erwärmung von Räumen für Heizzwecke als auch im Bedarfsfall eine Kühlung von Räumen. Statt des Wortes "Temperierung" werden im folgenden das Wort "Beheizung" und statt der Worte "temperiertes Medium" das Wort "Wärmeträger" verwendet.

Mit einer Wärmepumpe arbeitende Anlagen zur Beheizung von Räumen von Gebäuden sind seit langem bekannt und in unterschiedlichen Ausführungsformen auf dem Markt erhältlich und im Einsatz. Derartige Anlagen arbeiten - wie bereits erwähnt - mit vergleichsweise niedriger Vorlauftemperatur. Eine Einzelraumregelung der Temperatur, wie sie durch die in Deutschland geltende Energieeinsparverordnung (ENEV) vorgeschrieben wird, ist daher nur mit erheblichem Zusatzaufwand möglich, wie beispielsweise mit dem Einsatz eines Pufferspeichers oder mit einem zusätzlichen hydraulischen Abgleich.

Die ENEV schreibt bei Neuanlagen von Heizungsanlagen mit Flächenheizungen, unabhängig vom gewählten Energieerzeuger, eine Einzelraumregelung vor. Generell sind aber die Komfortbedürfnisse und die Funktion einer herkömmlichen Temperaturregelung für Einzelräume, ohne Berücksichtigung der anderen Räume eines Gebäudes, nicht mit den Möglichkeiten einer Wärmepumpe vereinbar. Die an den Temperatursensoren der Einzelräume eingestellten Sollwerte für die gewünschten Temperaturen sind ohne den erwähnten Zusatzaufwand mit einer WärmepumpenAnlage aufgrund der niedrigen Vorlauftemperatur nicht zu erreichen. Die in üblicher Technik kurzen Einschaltzeiten der einzelnen Heizkreise der Einzelräume reichen nicht aus, um entsprechende Wärmeleistungen in die Einzelräume einzubringen. Eine Regelung der Temperatur in Einzelräumen im herkömmlichen Sinne stört außerdem den normalen Betrieb einer Wärmepumpe, wenn beispielsweise die Ventile der Heizkreise aller Einzelräume durch Erreichen der eingestellten Sollwerte der Temperaturen geschlossen sind. In einem solchen Fall müßte die Wärmepumpe gegen geschlossene Ventile arbeiten und die Wärmepumpenanlage würde auf Störbetrieb schalten. Es werden daher in vielen Fällen auch bei Neuanlagen von Heizungsanlagen Ausnahmegenehmigungen beantragt und genehmigt und die Wärmepumpe wird dann mit gleichbleibender Beheizung aller Räume eines Gebäudes betrieben.

Der Erfindung liegt die Aufgabe zugrunde, das eingangs geschilderte Verfahren so zu gestalten, daß auch beim Einsatz einer Wärmepumpe eine Einzelraumregelung mit ausreichendem Komfort für den Benutzer ermöglicht wird.

Diese Aufgabe wird gemäß der Erfindung gelöst durch ein Verfahren zur Temperierung von Räumen eines Gebäudes (G) unter Verwendun einer Anordnung mit einer Wärmepumpe (WP), bei welchem in jedem Einzelraum (E) des Gebäudes (G) mindestens ein unter Zwischenschaltung eines Ventils mit der Wärmepumpe (WP) verbundener Heizkreis zur Durchleitung eines von der Wärmepumpe temperierten Mediums angeordnet wird, bei welchem in jedem Einzelraum (E) ein den Istwert der in demselben herrschenden Temperatur erfassender Temperatursensor (T) angebracht wird, an dem der Sollwert der für diesen Einzelraum (E) gewünschten Temperatur eingestellt wird, und bei welchem in dem Gebäude (G) eine zentrale Basis zur Verteilung des von der Wärmepumpe (WP) temperierten Mediums an die Heizkreise der Einzelräume (E) installiert wird, wobei
- in der Basis (B) ein mit einem Mikrokontroller ausgerüsteter, intelligenter Regler (R) angeordnet wird, dem von den Temperatursensoren (T) aller Einzelräume (E) ständig der Istwert und der Sollwert der Temperatur des jeweiligen Einzelraums aufgegeben werden,
- durch den Regler (R) in vorgebbaren zeitlichen Abständen für jeden Einzelraum (E) die Temperaturdifferenz zwischen dem Istwert und dem Sollwert der Temperatur gebildet und zur Einstellung des Ventils des jeweiligen Einzelraums im Ausgleichssinne verwendet wird,
- der Betrieb der Wärmepumpe (WP) durch ein vom Regler (R) abgegebenes Signal geregelt wird, und
- das Signal zur Regelung der Wärmepumpe (WP) von dem Einzelraum als Führungsraum abgeleitet wird, für den vom Regler (R) jeweils die größte Temperaturdifferenz festgestellt wird.

Mit diesem Verfahren ist sichergestellt, daß alle Einzelräume eines Gebäudes im Bedarfsfall ständig mit der benötigten Menge des von der Wärmepumpe gelieferten Wärmeträgers versorgt werden. Die Wärmepumpe arbeitet stets mit effektivster Leistungsabgabe und mit geringsten Schaltzyklen, da sie durch das Signal des Reglers nach Maßgabe des Einzelraums als Führungsraum geregelt wird, der aufgrund der größten Temperaturdifferenz den höchsten Wärmebedarf hat, und zwar solange, wie noch einer der Einzelräume mit Wärme versorgt werden muß. Vom intelligenten Regler der Basis wird jeweils der Einzelraum mit der höchsten Temperaturdifferenz erkannt und als Führungsraum für die Einzelraumregelung verwendet. Das Ventil für den Heizkreis dieses Einzelraums wird während seiner Eigenschaft als Führungsraum ständig offen gehalten. Die Ventile der Heizkreise der anderen Einzelräume werden solange offengehalten bzw. durch ein Signal des Reglers wieder geöffnet, bis die Temperatur in dem jeweiligen Einzelraum dem am Temperatursensor eingestellten Sollwert entspricht.

Erwärmt sich ein aktueller Führungsraum sehr schnell, eventuell auch durch einen zusätzlichen Wärmeeintrag (Sonneneinstrahlung), dann kann innerhalb einer vorgebbaren Zeitdauer von beispielsweise maximal sechs Minuten ein anderer Einzelraum als Führungsraum genutzt werden, für den eine dann größere

Temperaturdifferenz zwischen Istwert und Sollwert seiner Temperatur festgestellt wird als beim aktuellen Führungsraum. Das Ventil dieses Einzelraums, der jetzt neuer Führungsraum ist, wird dann ständig offen gehalten.

Insgesamt ist mit diesem Verfahren dafür gesorgt, daß immer mindestens ein Heizkreis ein geöffnetes Ventil aufweist, damit der von der Wärmepumpe gelieferte Wärmeträger "abgenommen" wird und die Wärmepumpe nicht in den gestörten Betrieb gehen kann. Die geschilderte Arbeitsweise der Wärmepumpe gilt solange, wie mindestens ein Einzelraum des Gebäudes noch einen Wärmeeintrag benötigt.

Sind in allen Einzelräumen eines Gebäudes einschließlich des aktuellen Führungsraums die eingestellten Sollwerte der Temperatur erreicht, dann signalisiert der Regler der Wärmepumpe beispielsweise über einen potentialfreien Kontakt "Absenkbetrieb". Das bedeutet, es wird keine Wärme mehr benötigt. Der Verdichter der Wärmepumpe arbeitet dann nicht mehr, und die Umwälzpumpe der Wärmepumpe kann deaktiviert werden, bis der Regler wieder einen Wärmebedarf signalisiert. Gleichzeitig mit der Stillsetzung der Wärmepumpe durch das Signal des Reglers werden die Ventile aller Heizkreise der Einzelräume in ihre Offenstellung gefahren, damit die Wärmepumpe beim Signal "Wärmebedarf" ihren Betrieb störungsfrei wieder aufnehmen kann.

Die Ventile der Heizkreise aller Einzelräume sind bei diesem Verfahren mit Vorteil jeweils mit einem elektrisch betriebenen Stellelement bestückt, durch welches sie dann in ihre Offenstellung bewegt werden, wenn kein elektrischer Strom fließt. Derartige Stellelemente sind mit einem temperaturabhängigen Dehnkörper und einem als Heizelement dienenden elektrischen Widerstand ausgerüstet. Wenn ein elektrischer Strom durch den Widerstand fließt, wird der mit einem Arbeitskolben ausgerüstete Dehnkörper erwärmt. Er dehnt sich aus und bringt das entsprechende Ventil mittels seines Arbeitskolbens in die Schließstellung. Bei Fortfall des Stroms findet keine Erwärmung des Dehnkörpers mehr statt, der automatisch in seine Ausgangsstellung zurückgeht. Das zugehörige Ventil geht dann "stromlos" unter der Wirkung einer Rückstellfeder automatisch in seine Offenstellung.

Das Verfahren nach der Erfindung wird im folgenden als Ausführungsbeispiel erläutert.

Es zeigen:
Fig. 1 in schematischer Darstellung in einem Gebäude befindliche Einzelräume und einen Heizkreisverteiler.
Fig. 2 den Heizkreisverteiler nach Fig. 1 in genauerer Darstellung.
Fig. 3 und 4 Regelkurven, die einem beim Verfahren nach der Erfindung verwendeten Regler aufgegeben sind.

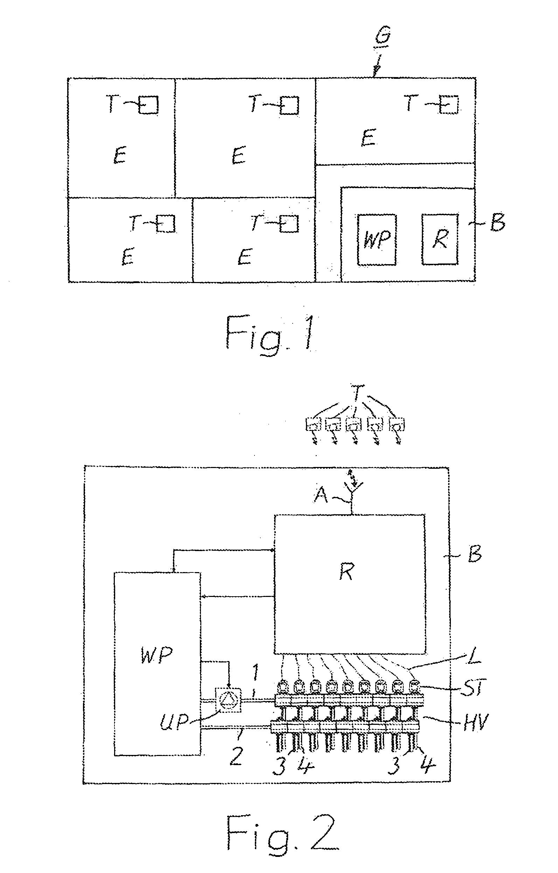

In Fig. 1 ist schematisch ein Gebäude G mit fünf Einzelräumen E dargestellt. Die Anzahl der Einzelräume kann auch kleiner oder insbesondere größer als die dargestellte Anzahl von fünf Einzelräumen sein. In jedem Einzelraum E ist ein Temperatursensor T angeordnet, an dem als Sollwert eine Raumtemperatur eingestellt werden kann, die in dem jeweiligen Einzelraum E herrschen soll. Die Temperatursensoren T messen als Istwert auch die Temperatur, die in dem jeweiligen Einzelraum E tatsächlich herrscht. In dem Gebäude G ist außerdem eine Basis B mit einem Heizkreisverteiler HV und einer Wärmepumpe WP angeordnet, durch welche der von derselben erzeugte Wärmeträger im Bedarfsfall Heizkreisen zugeführt wird, von denen in jedem Einzelraum E mindestens einer vorhanden ist.

Die Basis B weist einen mit einem Mikrokontroller bzw. Mikroprozessor ausgerüsteten intelligenten Regler R auf, der mit den Temperatursensoren T der Einzelräume E verbunden ist. Diese Verbindung kann durch elektrische Leitungen realisiert sein. Sie ist jedoch in bevorzugter Ausführungsform als Funkverbindung ausgeführt. Die Temperatursensoren T sind dazu mit Sendern ausgerüstet und senden den eingestellten Sollwert und den aktuellen Istwert der Temperatur ihres Einzelraums mit einer Frequenz von beispielsweise 868 MHz an die Basis B bzw. den Regler R, die bzw. der zum Empfang der entsprechenden Signale mit einer Antenne A versehen ist.

Jeder Heizkreis ist mit einem Ventil ausgerüstet. Alle Ventile sind im dargestellten Ausführungsbeispiel in dem Heizkreisverteiler HV montiert, der in der Basis B angeordnet ist. Die Ventile sind in ein von der Wärmepumpe WP ausgehendes, durch zwei Rohre 1 und 2 angedeutetes Rohrsystem eingeschaltet, in dem sich auch eine Umwälzpumpe UP befindet. Die von ihnen ausgehenden Heizkreise sind in Fig. 2 durch jeweils zwei Rohrenden 3 und 4 angedeutet.

An den Ventilen ist jeweils ein elektrisch betriebenes Stellelement ST angebracht, das einen mit einem Arbeitskolben ausgerüsteten temperaturabhängigen Dehnkörper und ein vorzugsweise als elektrischer Widerstand ausgeführtes Heizelement aufweist. Der Arbeitskolben des Stellelements ST wird durch den Dehnkörper in seiner Achsrichtung bewegt. Er liegt in Montageposition mit seiner Stirnfläche am Stößel des zugehörigen Ventils an, auf den eine Rückstellfeder einwirkt. Das Stellelement ST ist mit Vorteil so ausgelegt, daß das zugehörige Ventil dann offen ist, wenn dem Heizelement kein Strom zugeführt wird und dasselbe dementsprechend nicht erwärmt wird. Die Ventile aller Heizkreise sind also "stromlos offen". Sie werden dann durch das jeweilige Stellelement ST geschlossen, wenn dessen Heizelement durch eine vom Regler R veranlaßte Stromzufuhr erwärmt wird. Dazu sind die Stellelemente ST über elektrische Leitungen L mit dem Regler R verbunden.

Grundsätzlich können alle Ventile der Heizkreise aller Einzelräume E solange geöffnet bleiben, bis die Temperatur in dem jeweiligen Einzelraum die als Sollwert eingestellte Temperatur erreicht hat. Während dieser Zeit wird dem jeweiligen Einzelraum der von der Wärmepumpe WP gelieferte Wärmeträger mit einer Temperatur von beispielsweise 30 °C ohne Einschränkung zugeführt. Wenn der Regler R dann feststellt, daß in einem oder mehr als einem Einzelraum E Istwert und Sollwert der Raumtemperatur übereinstimmen, dann wird zwar das entsprechende Ventil sofort geschlossen. Es ist aber bei dieser Art der Regelung nicht zu vermeiden, daß der jeweilige Einzelraum wegen des ständig zugeführten Wärmeträgers zu hoch erwärmt wird und dann erst wieder abkühlen muß. Dieser Mangel wirkt sich insbesondere bei Fußbodenheizungen aus, die bekanntermaßen sehr träge auf Änderungen der Temperatur des Wärmeträgers reagieren.

Um diesen zusätzlichen und keineswegs wünschenswerten Energieaufwand zu vermeiden, wird der Wärmeträger den Einzelräumen in einer vorteilhaften Ausgestaltung des Verfahrens nach der Erfindung mit Unterbrechungen zugeführt. Ein solches Verfahren arbeitet beispielsweise wie folgt:

Bei Einschaltung der Anordnung zum Beheizen der Einzelräume E sind alle Ventile aller Heizkreise offen. An jedem Temperatursensor T ist eine gewünschte Raumtemperatur als Sollwert eingestellt. Die Wärmepumpe WP ist in Betrieb und die Umwälzpumpe UP ist eingeschaltet. Die Temperatursensoren T senden in einstellbaren zeitlichen Abständen Signale an den Regler R, welche dem Sollwert und dem Istwert der jeweiligen Raumtemperatur entsprechen.

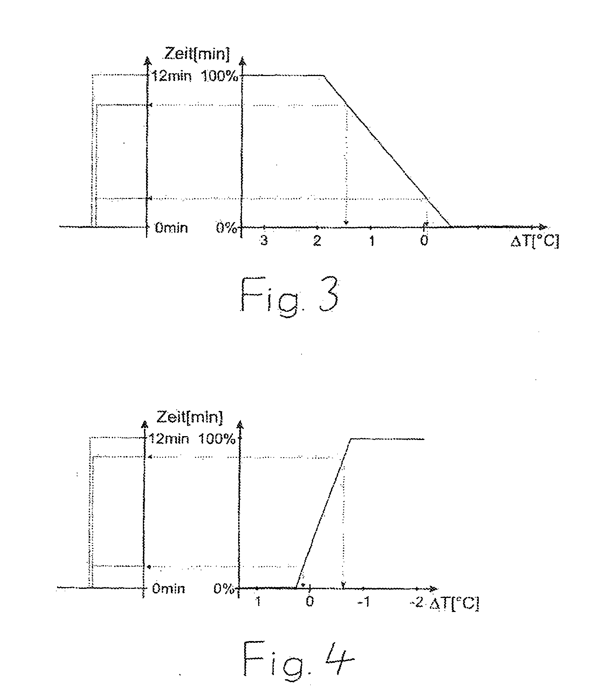

Der Regler R bildet aus dem jeweiligen Istwert und dem zugehörigen Sollwert der Raumtemperatur jedes Einzelraums E die Temperaturdifferenz ΔT und regelt das Ventil des jeweiligen Heizkreises gemäß einer aus Fig. 3 ersichtlichen, eingeprägten Regelkurve so, daß es für eine bestimmte Zeitdauer offen ist und dann geschlossen wird. Diese Zeitdauer beträgt gemäß der Regelkurve beispielsweise bei einer Temperaturdifferenz von ΔT = 2,5 °C neun Minuten. Analog zu dieser Arbeitsweise werden die Ventile aller Heizkreise nacheinander durch den Regler R bedient, bis auf das Ventil des Führungsraums mit der größten Temperaturdifferenz, das dauernd offen bleibt. Die Steilheit der Regelkurve ist variabel. Sie kann zur Anpassung an die Gegebenheiten von mit dem Verfahren nach der Erfindung zu bedienenden Gebäuden bzw. Einzelräumen auch steiler oder weniger steil als die Regelkurve nach Fig. 3 verlaufen.

Im Zyklus der Regelung der Ventile aller Einzelräume E wird das jeweilige Ventil durch den Regler R wieder geöffnet und wieder nach Maßgabe der Regelkurve nach Fig. 3 eine vorgegebene Zeitdauer offen gehalten und dann wieder geschlossen. Dieser Zyklus läuft so lange ab, bis in allen Einzelräumen E die dem eingestellten Sollwert entsprechende Raumtemperatur erreicht ist, und zwar wegen der dosierten Zufuhr des Wärmeträgers mit allmählicher Annäherung an diesen Sollwert, ohne die Gefahr einer Übererwärmung. Bei einem über die Außentemperatur geführten Wärmeerzeuger kann außerdem eine flache Heizkurve eingestellt werden. Durch eine entsprechend niedrige Vorlauftemperatur kann so der Selbstregeleffekt einer Flächenheizung ausgenutzt werden. Je näher sich die Raumtemperatur der Flächentemperatur anpaßt, umso geringer ist die Wärmeabgabe der Fläche.

Wenn der Sollwert der Temperatur auch für den jeweiligen Führungsraum erreicht ist, werden Wärmepumpe WP und Umwälzpumpe UP durch den Regler R stillgesetzt. Gleichzeitig wird die Stromzufuhr an die Stellelemente ST der Ventile unterbrochen, die dadurch energiesparend automatisch in ihre Offenstellung gehen. Es steht durch diese Maßnahme beim Wiedereinschalten der Wärmepumpe WP ein offenes Rohrsystem zur Aufnahme des von derselben gelieferten Wärmeträgers zur Verfügung.

Analog zur Erwärmung der Einzelräume E kann mit dem Verfahren nach der Erfindung auch eine Kühlung derselben vorgenommen werden, wenn dieselben beispielsweise im Sommer zu warm sind. Dazu kann dem Regler R zusätzlich eine aus Fig. 4 ersichtliche Regelkurve aufgegeben werden, die steiler als die Regelkurve nach Fig. 3 verläuft und auf die der Regler R gegebenenfalls umgeschaltet wird.

Im Falle der Kühlung von Einzelräumen E hat der von der Wärmepumpe WP gelieferte Wärmeträger beispielsweise eine Temperatur von 18 °C. Das kann beispielsweise mit einer Solewasserpumpe erreicht werden. Auch hier wird vom Regler R die Temperaturdifferenz ΔT zwischen dem Istwert und dem Sollwert der jeweiligen Raumtemperatur ermittelt. Der kühlere Wärmeträger wird dann beispielsweise bei einer Temperaturdifferenz von ΔT = 0,5 °C dem jeweiligen Einzelraum für eine Zeitdauer von 10 Minuten zugeführt. Hier läuft ein Zyklus analog zu dem für Fig. 3 beschriebenen ab. Einzelräume, die nicht gekühlt werden sollen bzw. müssen, können von der Regelung ausgenommen werden.

## Patentansprüche

1. Verfahren zur Temperierung von Räumen eines Gebaudes (G) unter Verwendun einer Anordnung mit einer Wärmepumpe (WP), bei welchem in jedem Einzelraum (E) des Gebäudes (G) mindestens ein unter Zwischenschaltung eines Ventils mit der Wärmepumpe (WP) verbundener Heizkreis zur Durchleitung eines von der Wärmepumpe temperierten Mediums angeordnet wird, bei welchem in jedem Einzelraum (E) ein den Istwert der in demselben herrschenden Temperatur erfassender Temperatursensor (T) angebracht wird, an dem der Sollwert der für diesen Einzelraum (E) gewünschten Temperatur eingestellt wird, und bei welchem in dem Gebäude (G) eine zentrale Basis zur Verteilung des von der Wärmepumpe (WP) temperierten Mediums an die Heizkreise der Einzelräume (E) installiert wird, wobei
- in der Basis (B) ein mit einem Mikrokontroller ausgerüsteter, intelligenter Regler (R) angeordnet wird, dem von den Temperatursensoren (T) aller Einzelräume (E) ständig der Istwert und der Sollwert der Temperatur des jeweiligen Einzelraums aufgegeben werden,
- durch den Regler (R) in vorgebbaren zeitlichen Abständen für jeden Einzelraum (E) die Temperaturdifferenz zwischen dem Istwert und dem Sollwert der Temperatur gebildet und zur Einstellung des Ventils des jeweiligen Einzelraums im Ausgleichssinne verwendet wird,
- der Betrieb der Wärmepumpe (WP) durch ein vom Regler (R) abgegebenes Signal geregelt wird, und
- das Signal zur Regelung der Wärmepumpe (WP) von dem Einzelraum als Führungsraum abgeleitet wird, für den vom Regler (R) jeweils die größte Temperaturdifferenz festgestellt wird.

2. Verfahren nach Anspruch 1, **dadurch gekennzeichnet, daß** dann, wenn vom Regler (R) für keinen der Einzelräume (E) eine Temperaturdifferenz festgestellt wird, ein Signal mit dem Inhalt "es wird kein Medium mehr benötigt" an die Wärmepumpe (WP) abgegeben wird und gleichzeitig die Ventile aller Einzelräume (E) in ihre Offenstellung gefahren werden.

3. Verfahren nach Anspruch 1 oder 2, **dadurch gekennzeichnet, daß** die Übertragung der Daten zwischen den Temperatursensoren (T) der Einzelräume (E) und dem Regler (R) der Basis (B) über Funk durchgeführt wird.

4. Verfahren nach Anspruch 1 oder 2, **dadurch gekennzeichnet, daß** die Übertragung der Daten zwischen den Temperatursensoren (T) der Einzelräume (E) und dem Regler (R) der Basis (B) leitungsgebunden durchgeführt wird.

5. Verfahren nach einem der Ansprüche 1 bis 4, **dadurch gekennzeichnet, daß** dem Regler (R) mindestens eine Regelkurve aufgegeben wird, in welcher die Zeitdauer zur Zuführung des von der Wärmepumpe (WP) erzeugten Mediums an jeden der Einzelräume (E) in Abhängigkeit von der individuell ermittelten Temperaturdifferenz zwischen Istwert und Sollwert der Raumtemperatur erfaßt ist.

## Claims

1. Method for controlling the temperature of rooms in a building (G) by using an arrangement with a heat pump (WP), in which at least one heating circuit, which is connected to the heat pump (WP) with a valve interposed and is intended for passing through a medium of which the temperature is controlled by the heat pump, is arranged in each individual room (E) in the building (G), in which a temperature sensor (T), which records the actual value of the temperature prevailing in each individual room (E) and at which the nominal value of the temperature desired for this individual room (E) is set, is provided in each individual room (E), and in which a central base for distributing the medium of which the temperature is controlled by the heat pump (WP) to the heating circuits of the individual rooms (E) is installed in the building (G), wherein
- an intelligent controller (R), which is equipped with a microcontroller and to which the actual value and the nominal value of the temperature of the respective individual room are constantly sent by the temperature sensors (T) of all the individual rooms (E), is arranged in the base (B),
- the temperature difference between the actual value and the nominal value of the temperature is formed by the controller (R) at predeterminable time intervals for each individual room (E) and is used for setting the valve of the respective individual room in an equalizing sense,
- the operation of the heat pump (WP) is controlled by a signal emitted by the controller (R), and
- the signal for controlling the heat pump (WP) is derived from the individual room for which the greatest temperature difference is respectively established by the controller (R), as a reference room.

2. Method according to claim 1, **characterized in that**, whenever a temperature difference is not established by the controller (R) for any of the individual rooms (E), a signal with the content "no more medium is required" is emitted to the heat pump (WP) and at the same time the valves of all the individual rooms (E) are moved into their open position.

3. Method according to claim 1 or 2, **characterized in that** the transmission of the data between the temperature sensors (T) of the individual rooms (E) and the controller (R) of the base (B) is carried out in a wireless manner.

4. Method according to claim 1 or 2, **characterized in that** the transmission of the data between the temperature sensors (T) of the individual rooms (E) and the controller (R) of the base (B) is carried out in a wired manner.

5. Method according to one of the claims 1 to 4, **characterized in that** at least one control curve in which the time period for feeding the medium generated by the heat pump (WP) to each of the individual rooms (E) is recorded in dependence on the individually determined temperature difference between the actual value and the nominal value of the room temperature is sent to the controller (R).

## Revendications

1. Procédé de régulation de la température de pièces d'un bâtiment (G) utilisant un agencement comprenant une pompe à chaleur (WP), dans lequel, dans chaque pièce individuelle (E) du bâtiment (G), est disposé au moins un circuit de chauffage connecté à la pompe à chaleur (WP) avec interposition d'une soupape, pour conduire un fluide régulé en température par la pompe à chaleur, dans lequel dans chaque pièce individuelle (E) est installé un capteur de température (T) détectant la valeur réelle de la température dans ladite pièce, au niveau duquel capteur de température est ajustée la valeur de consigne de la température souhaitée pour cette pièce individuelle (E), et dans lequel une base centrale est installée dans le bâtiment (G) pour distribuer le fluide régulé en température par la pompe à chaleur (WP) aux circuits de chauffage des pièces individuelles (E), en ce que
- un régulateur intelligent (R) muni d'un microcontrôleur étant disposé dans la base (B), auquel sont fournies en continu, par les capteurs de température (T) de toutes les pièces individuelles (E), la valeur réelle et la valeur de consigne de la température de la pièce individuelle respective,
- la différence de température entre la valeur réelle et la valeur de consigne de la température étant déterminée par le régulateur (R) à intervalles de temps prédéfinissables pour chaque pièce individuelle (E) et étant utilisée pour ajuster la soupape de la pièce individuelle respective dans le sens d'un équilibrage,
- le fonctionnement de la pompe à chaleur (WP) étant régulé par un signal fourni par le régulateur (R), et
- le signal de régulation de la pompe à chaleur (WP) est dérivé de la pièce individuelle en tant que pièce maîtresse, pour laquelle la plus grande différence de température est à chaque fois détectée par le régulateur (R).

2. Procédé selon la revendication 1, **caractérisé en ce que** lorsqu'une différence de température n'est détectée par le régulateur (R) pour aucune des pièces individuelles (E), un signal indiquant "du fluide n'est plus requis" est fourni à la pompe à chaleur (WP) et simultanément les soupapes de toutes les pièces individuelles (E) sont amenées dans leur position ouverte.

3. Procédé selon la revendication 1 ou 2, **caractérisé en ce que** le transfert de données entre les capteurs de température (T) des pièces individuelles (E) et le régulateur (R) de la base (B) est effectué par radio.

4. Procédé selon la revendication 1 ou 2, **caractérisé en ce que** le transfert des données entre les capteurs de température (T) des pièces individuelles (E) et le régulateur (R) de la base (B) est effectué par ligne.

5. Procédé selon l'une quelconque des revendications 1 à 4, **caractérisé en ce qu'**au moins une courbe de régulation est fournie au régulateur (R), dans laquelle la durée pour l'alimentation en fluide généré par la pompe à chaleur (WP) de chacune des pièces individuelles (E) est détectée en fonction de la différence de température, déterminée individuellement, entre la valeur réelle et la valeur de consigne de la température de la pièce.
